# EUROPEAN PATENT SPECIFICATION

(11) **EP 2 473 430 B1**
(45) Date of publication and mention of the grant of the patent: **03.12.2014**
(21) Application number: 10757305.7
(22) Date of filing: 02.09.2010
(51) Int. Cl.: B65H 75/40, H01R 13/72, H02G 11/02

(54) **DEVICE AND METHOD FOR STORING AN ELECTRICITY CABLE**
VORRICHTUNG UND VERFAHREN ZUR AUFBEWAHRUNG EINES STROMKABELS
DISPOSITIF ET PROCÉDÉ POUR STOCKER UN CÂBLE D'ÉLECTRICITÉ

(30) Priority: 02.09.2009 NL 2003425
(43) Date of publication of application: 11.07.2012
(73) Proprietor: Atco B.V., 8081 GR Elburg (NL)
(72) Inventor: HUISMAN, Ben, NL-8081 GR Elburg (NL)
(74) Representative: van Oeffelt, Abraham
(86) International application number: PCT/NL2010/050550
(87) International publication number: WO 2011/028111

(56) References cited:
- WO-A1-2006/106535
- WO-A2-2005/099344
- DE-A1- 19 523 178
- DE-U1- 29 802 397
- FR-A1- 2 390 360
- GB-A- 2 261 869
- US-A- 2 952 420
- US-A- 5 507 667
- US-A- 6 164 582
- US-A1- 2007 066 130
- US-A1- 2007 091 592
- US-B1- 6 428 348

## Description

The present invention relates to a device and to a method for storing an electricity cable.

Electricity cables are available in many types and sizes. A known electricity cable is a cable forming part of a charger for charging a battery of electrical apparatus such as mobile telephones, navigation systems, laptops, portable music player (such as an I-phone® or I-pod® from the company Apple Inc, Cupertine, California, United States) and so forth. For this purpose such cables are usually connected at a first end to an adapter, which adapter comprises a plug, and at a second end to an apparatus-specific plug, which plug has to be inserted into an opening of the apparatus suitable for this purpose. The use of such a charger for charging a battery is assumed to be generally known. After charging of the apparatus the charger can be stored away. The cable dangling from the charger tends here to be a serious obstacle to tidy storage of such a charger. The bias created in the cable by for instance rolling up the cable can result in the cable unfolding into an undesirable tangle, which can also become entangled with itself or components in the immediate vicinity of the cable. This can be annoying and/or frustrating for a user, particularly as a result of rising irritation during unravelling of the tangle prior to normal use of the cable and the risk of damage to the cable and/or the surrounding components.

Another known solution for the above problem is described in the US Patent US 2 952 420, which describes a device according to the preamble of claim 1.

There is therefore a need for a device for storing an electricity cable connected to a plug, wherein the cable can be stored in a convenient and at least tidier manner.

It is an object of the invention to provide for at least the above stated need.

This object is achieved with a device for storing an electricity cable comprising a holder for the cable, according to claim 1, wherein the holder fits within a space with a width, length and height each lying between 4 and 15 centimetres, preferably between 5 and 12 centimetres and most preferably between 6 and 10 centimetres, wherein the holder comprises a carrier for holding at least a part of the cable round the carrier, wherein the carrier is provided with at least one protrusion for preventing a relative displacement of the carrier and a part of the cable held round the carrier, wherein the carrier is formed by a first peripheral wall which encloses a space and wherein the holder is adapted to at least partially engage at least one plug, which is connected directly or indirectly to the electricity cable, in the space enclosed by the first peripheral wall. A device is hereby provided with which an electricity cable can be stored in tidier manner. Because the holder is adapted to engage the plug, a storage unit is obtained in which movable components are mutually connected. The plug can be connected directly to the electricity cable or for instance form part of a housing of an adapter to which the electricity cable is connected, as will be elucidated at length hereinbelow. The plug to which reference is made in the present invention is in principle a mains plug or at least a plug of a size such that the device of the present invention can engage thereon. The plugs can for instance be embodied as known two-core flat plugs or three-core earthed plugs. The plug can also be embodied as an accessory plug, also referred to as cigarette lighter, for use in a vehicle such as a car, truck or boat. Such accessory plugs usually comprise an elongate, cylindrically formed housing provided with one first plug pin extending outside the housing in the axial direction of the plug and one or more second plug pins located at a distance from the first plug pin on the outside of a peripheral wall of the housing of the accessory plug. For use of the accessory plug the vehicle is provided with an opening which is suitable for the accessory plug and which is adapted for electrically conductive connection of the accessory plug to a source of electrical energy. Because the holder fits inside a space with a width, length and height lying between 4 and 15 centimetres, preferably between 5 and 12 centimetres and most preferably between 6 and 10 centimetres, a holder is provided which provides sufficient space for storing a cable, is sufficiently convenient for simple storage of the cable by a user since the holder can be held easily in a hand of the user, and is sufficiently small for storing the device in a trouser pocket, jacket pocket or inside pocket, bag, drawer and so on. The first peripheral wall encloses a space, the characteristic cross-section of which can take a variable form, such as a rectangle. The form of the cross-section of the space is preferably a circle or an oval. A compact device is obtained by using such shapes. An oval-shaped carrier can also be engaged effectively by a user since the hand of the user can apply a moment of force to the carrier, whereby rotation can be prevented during winding of the cable round the carrier. In the oval and round embodiments the length and width of the oval respectively the diameter of the outer edge of the flanges connected to the canier lie between 4 and 15 centimetres, preferably between 5 and 12 centimetres and most preferably between 6 and 10 centimetres. The space enclosed by the first peripheral wall can also be adapted to the form of the at least one plug, wherein the form of the space enclosed by the first peripheral wall also defines the form of the first peripheral wall. A simple holder is hereby provided which not only takes a compact form but which also requires a limited amount of material to form the holder. The invention relates particularly to low-voltage and weak-current cables, i.e. cables on the low-voltage side of an adapter and so operating at voltages between 0 and 48 volt, particularly between 3 and 24 volt, and more particularly between 4.5 and 12 volt, or carrying currents between 0 and several tens of milliamperes. In contrast to mains voltage cables such cables are often very thin, so that the stiffness of the insulating material generally manufactured from plastic distorts the cable into bends and twists, a problem which does not occur, or less so, in mains voltage cables owing to the relatively high weight per metre thereof. Although the use of high-voltage cables is not precluded, such cables usually have too great a stiffness, so that the cable must be deformed in order to be wound compactly, i.e. at least partially making contact, round a carrier of a device according to the invention. Applying the device according to the present invention reduces the risk of the cable forming a tangled ball and the cable becoming entangled with surrounding components. The plug here comprises a plug housing, which can be a connecting element of the plug to the cable, for electrically conductive connection of the plug pins to the cores of the cable, wherein the plug housing provides an electrically insulated housing. The plug housing can however also form part of a charger, wherein the plug pins are connected to the plug housing. Chargers of differing brands and/or differing apparatus are usually distinguished by the design of a plug connected to the cable, which must be inserted into an opening of the apparatus suitable for the purpose. The device according to the invention is suitable for application in combination with chargers for diverse apparatus and of diverse brands. This makes the device according to the invention simple to use and widely applicable, i.e. suitable for diverse apparatus. The holder can be adapted here to engage the plug under bias, whereby the plug is connected better, i.e. with increased clamping force, to the holder. In the case of a possible movement of the holder, such as a jolting movement, the plug will hereby remain connected to the holder. The plug can however also be engaged by the holder without bias. The plug can hereby be released from the holder with only a small force. The holder can also be provided with a blocking for limiting a displacement of the plug inside the holder in a desired direction.

In a practical embodiment the holder is adapted to engage only the plug pins of the at least one plug. The plug housing hereby extends substantially outside the holder and the cable connected to the plug can be easily placed in the holder, wherein the risk of cable break due to relatively great deformation of the cable is also reduced.

Although it is not precluded that the holder be adapted to engage substantially the whole plug or a substantial part of the plug, the holder is particularly adapted to engage substantially only the plug housing. Because only the plug housing is engaged the plug pins are left free, which reduces the risk of permanent deformation of the plug pins during removal of the plug from the holder. A permanent deformation of the plug pins can prevent normal use of the plug because the necessary distance between the plug pins is determined by a plug socket.

The holder can be adapted to at least partially form-fittingly engage at least one plug, connected directly or indirectly to the electricity cable, in the space enclosed by the first peripheral wall, wherein the holder can be adapted to clampingly engage the plug. In a practical embodiment the space enclosed by the first peripheral wall is at least partially bounded by two opposite side walls, which side walls are provided with grooves for engaging the plug housing. By placing the plug only in the space enclosed by the first peripheral wall the plug is engaged by the grooves situated in the side walls. Not only is a device hereby obtained with which a cable can be stored in compact manner, since the plug extends at least partially in the recess, but the risk of possible damage to particularly the plug pins is also reduced.

In another embodiment the holder is adapted to engage the at least one plug in electrically insulating manner. This results in a device which is safer for the user since a possible contact with particularly an outer side of the holder cannot result in an electrical conduction to the user if the plug were to be under voltage. In a situation where it engages the at least one plug the holder is particularly adapted here to leave clear a part of the at least one plug for electrically conductive connection of the plug to a plug socket. The cable can hereby be used, for instance to charge a telephone, while the cable is at least partially stored away in the holder. The full length of the cable of a charger as supplied by the supplier of the charger and/or the product to be charged is after all not usually necessary for normal use. With the device according to the invention the charger can be used, wherein a non-required part of the length of the cable is stored in the holder. Not only does this look tidier, the risk of damage to the cable or surrounding products is also reduced. In a situation in which it engages the at least one plug the holder can be adapted in diverse ways to leave clear at least a part of the plug pins for electrically conductive connection of the at least one plug to a plug socket. In a situation engaging the at least one plug, the holder itself can thus comprise plug pins which are connected for electrical conduction to the plug pins of the at least one plug, wherein the plug pins of the holder can themselves be connected to a plug socket. In an embodiment the holder comprises a bridge, which extends particularly between two opposite points of the inner wall of the carrier, on the inner wall and close to a first edge of the cylindrical carrier, and which is provided with holes for leaving clear, in a situation engaging on the at least one plug, at least a part of the plug pins on the side of the bridge remote from the cylindrical carrier for the purpose of electrically conductive connection of the at least one plug to a plug socket. Such a holder can take a simple form.

The holder can be embodied in different ways. The holder can thus be embodied as a box. In an embodiment the holder comprises two flanges connected to the carrier and extending at a mutual distance and substantially parallel to each other for holding at least a part of the cable round the carrier and between the flanges. A user can wind the cable easily round the carrier, wherein the cable is held between the flanges, and connect the plug to the holder. A compact device is hereby obtained. This further reduces the size of the device because the plug can be engaged in a space inside the holder. The holder can also comprise at least three flanges connected to the carrier and extending at a mutual distance and substantially parallel to each other for holding at least a part of at least two cables round the carrier and between the flanges. The three flanges here form two receiving spaces for holding at least a part of at least two cables round the carrier and between the flanges. A cable can hereby be held in each of the two individual receiving spaces. It is common for electrical apparatus, such as mobile telephones, navigation systems, laptops, portable music player, to comprise more than one cable, such as a cable forming part of a charger of a portable music player and headphones provided with a cable. In this case a plurality of cables hanging freely from the electrical device can be stored away tidily. It is not precluded that the holder comprises more than three flanges for the purpose of forming more than two receiving spaces for holding at least a part of at least three cables round the carrier and between the flanges. In addition to flanges, other protrusions can also form a receiving space. The protrusions can thus comprise one or more pins extending from the carrier, particularly with a component in the radial direction of a cylindrical carrier, for the purpose of holding at least a part of at least one cable round the carrier and between and/or round the pins.

According to the invention, the device comprises a cover element for covering the holder. The cable possibly being forced out of the holder, for instance because a bias has developed in the cable during placing of the cable in the holder, is prevented by covering the holder. The cover element can be a lid. The cover element is formed by a peripheral wall which can be placed round at least one flange connected to the carrier. The holder can hereby be closed in simple manner. After winding of the cable round the carrier the peripheral wall need only be placed round a flange and displaced in the direction of the flange placed at a distance.

In another embodiment the peripheral wall comprises at least one inward directed protrusion for the purpose of forming, in co-action with a flange connected to the carrier, a blocking for the peripheral wall. A displacement of the peripheral wall by a flange connected to the carrier is blocked by the at least one inward directed protrusion. The risk of an undesired displacement of the cover element relative to the carrier, and thereby of the cable being undesirably forced out of the holder, is hereby reduced. The protrusion is particularly located on a side edge of the peripheral wall. Both side edges particularly comprise at least one inward directed protrusion. The protrusion can be formed as an edge or tongue extending inwardly of the peripheral wall or as a plurality of protrusions situated at a mutual distance.

In yet another embodiment the holder comprises a passage for throughfeed of the cable into the holder. A device is hereby obtained with which a cable can be stored away in improved manner. Because the holder comprises a passage for throughfeed of the cable into the holder, the cable can be carried into the holder tidily and without possible pinching of the cable. This is particularly advantageous if the container is provided with a cover element which substantially wholly closes the access of the cable to the interior of the holder. The passage can be situated at different locations on both the carrier and the cover element. The passage can be formed as a closed opening or a slot.

In yet another embodiment the device comprises a clamp for clampingly engaging the cable. Because the device comprises a clamp, in particular a free end part of the cable can be fixedly connected to the device. Because a first free end part of the cable is hereby connected to the device, i.e. the free end part where the plug is connected to the cable, and a second free end part is connected to the device, the tidy storage of the cable is further improved. This is because the risk of the cable forming into a tangle or the cable becoming entangled with surrounding products is hereby further reduced.

In an advantageous embodiment the holder comprises at least one slot which is situated in at least one flange and/or the carrier and is accessible from an outer edge of the at least one flange and which comprises at least one tapering portion. When the cable is placed in the slot and urged in the direction of the tapering portion of the slot, a clamping action is obtained irrespective of the diameter of the cable. When the cable is urged into a tapering portion of the slot present in the carrier, a free end part of the cable can be held inside a space enclosed by the holder. The stored cable hereby takes up less space.

The slot present in the flange can extend in various directions, wherein the tapering portion thereof can likewise extend in various directions. The at least one slot particularly extends in a peripheral direction and the slot tapers in a peripheral direction. Through a simple rotating movement of the component of the device in which the slot is situated relative to the cable, the cable can hereby be urged into the tapering portion of the slot, whereby a clamping action thus occurs. The at least one slot can also extend and taper in both peripheral directions. The component of the device in which the slot is situated can here be rotated relative to the cable irrespective of the direction of rotation, and the cable can thereby be urged into a tapering portion of the slot. Both left-handed and right-handed users can hereby rotate the component of the device in which the slot is situated in their preferred direction relative to the cable and thereby clamp the cable in the slot.

In another practical embodiment the holder comprises at least two tapering slots present in at least one flange and situated at a mutual distance. A user can hereby clamp the cable in a desired slot depending on the location of a free end part of the cable relative to the at least two slots. The presence of at least two slots situated at a mutual distance in a flange can reduce the length of a free end part that is not clamped. The at least two slots are particularly situated about halfway along the periphery of a flange, whereby the length of a free end part of the cable cannot amount to more than half the periphery of a flange.

In another embodiment at least one slot is situated in both flanges. Owing to this measure the convenience of use can be increased and the cable can also be stored away in even tidier manner. By carrying the cable into the holder through a slot on a first flange and clampingly engaging a free end part of the cable using a slot on a second flange, no cable or only a minimal amount of cable will lie outside the space enclosed by the holder.

The holder can be manufactured from diverse materials. The holder is particularly manufactured substantially from an elastic material. Not only does this reduce the risk of breakage, for instance as a result of the holder falling to the ground, but the elasticity of the holder obtained through the use of an elastic material can also be used to engage the holder clampingly, i.e. under bias. A deformation of the holder is obtained by urging the plug into the holder, whereby a clamping force is obtained against the plug. The side walls provided with a groove particularly push against the plug here. The device is particularly manufactured from a plastic such as polystyrene (PS), acrylonitrile butadiene styrene (ABS).

In a preferred embodiment the carrier takes a substantially cylindrical form, wherein the carrier is provided on either side with a flange for holding at least a part of the cable round the carrier and between the flanges, wherein the holder comprises a bridge extending between two opposite points on the inner wall of the cylindrical carrier and provided with holes for engaging plug pins of the at least one plug.

In another preferred embodiment the carrier takes a substantially cylindrical form, wherein the carrier is provided on either side with a flange for holding at least a part of the cable round the carrier and between the flanges, engaging means for the at least one plug, wherein the engaging means comprise two recesses extending parallel to the axis of the carrier and in radial direction for substantially form-fitting engagement on side edges of a plug. Side edges of a plug can hereby be placed in the recesses and thus be received by the side walls.

The recesses can take diverse forms. In an embodiment the two recesses extending parallel to the axis of the carrier and in radial direction have a triangular or at least partially arcuate cross-section. Use of a recess of a triangular form enables tidy storing away of an electricity cable connected to a standardized flat europlug. Use of a recess of at least partly arcuate form enables tidy storing away of an electricity cable connected to a plug with arcuate side edges. A flat plug with arcuate side edges is applied in, among others, a charger for charging the I-phone® or I-pod® of the company Apple Inc.

The engaging means can also be adapted to engage both a flat europlug and a flat plug with arcuate side edges as applied in a charger for charging the I-phone® or I-pod®, as described above.

In another embodiment the carrier takes a cylindrical form, wherein the carrier is provided on either side with a flange for holding at least a part of the cable round the carrier and between the flanges, and engaging means for the at least one plug, wherein the engaging means are adapted for substantially form-fitting engagement on a USB plug and/or a mini USB plug. USB plugs are known to the skilled person and are usually connected to cables to obtain a communication connection between an apparatus (such as a portable telephone, music player for playing music in the MP3 format, and so on) and a computer, such as a laptop or a desktop computer. There are diverse embodiments of USB plugs, the best-known of which are of the type A, mini-A, B and mini-B.

The engaging means preferably comprise a peripheral wall enclosing a receiving space for substantially form-fitting engagement on a peripheral wall of the USB plug and/or mini USB plug, and/or comprise a protrusion for substantially form-fitting engagement on a recess of the USB plug and/or mini USB. There are male and female embodiments, wherein the male type of USB plug can be received in the female USB type. The male embodiment is usually connected to a cable, which male embodiment can be coupled into a female embodiment of the USB plug forming part of an apparatus such as a computer. The engaging means described in this embodiment are adapted to receive a male type of USB plug. The engaging means of the device according to the invention can however also be adapted to engage a USB plug of the female type. For this purpose the engaging means comprise for instance a protrusion which is formed as a USB plug of the male type. The engaging means can also be adapted to engage a USB plug of both the female type and the male type. The engaging means can be adapted here to engage the USB plug under bias. At least a part of the holder can be manufactured for this purpose from an elastic material such as a plastic. The dimensioning of the peripheral wall enclosing the receiving space can also be adapted to the dimensioning of the USB plug such that the USB plug can be received clampingly in the receiving space. The dimensions of the different types of USB plug are known to the skilled person.

A method corresponding with the device according to the invention for storing an electricity cable connected to a plug, particularly making use of the device according to the invention, comprises of: placing the cable in a holder and connecting the plug to the holder by the holder engaging at least a part of a plug housing of the plug. For the advantages of this method reference is made to the advantages of the device according to the invention as set forth above.

The present invention will be further elucidated on the basis of the non-limitative exemplary embodiments shown in the following figures. Herein:
figure 1 is a perspective view of a carrier of a device according to the invention for storing an electricity cable connected to a plug;
figure 2 is a perspective view of a cover element of a device according to the invention for storing an electricity cable connected to a plug;
figure 3 is a top view of the carrier of figure 1;
figure 4 shows a cross-section of the carrier of figure 3 along line A-A;
figure 5 is a top view of the cover element of figure 2;
figure 6 shows a cross-section of the cover element of figure 5 along line A-A;
figure 7 shows a detail of the cross-section of the cover element of figure 6;
figure 8 is a perspective view of a device according to the invention for storing an electricity cable connected to a plug, wherein the carrier engages a plug housing;
figure 9 is a top view of the device of figure 8;
figure 10 shows a cross-section of the device of figure 9 along line C-C;
figure 11 shows a detail of the cross-section of the device of figure 10;
figure 12 shows a cross-section of the device of figure 9 along line B-B;
figure 13 is a perspective view with exploded parts of a device according to the invention for storing an electricity cable connected to an accessory plug;
figure 14 is a perspective view, shown partially in cross-section, of the device according to figure 13 for storing an electricity cable connected to an accessory plug.

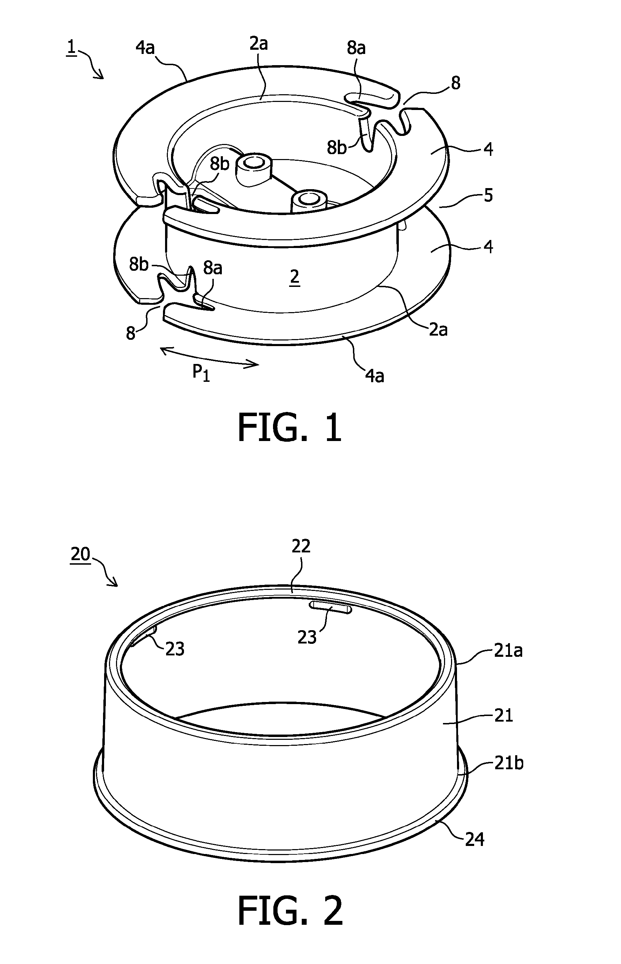

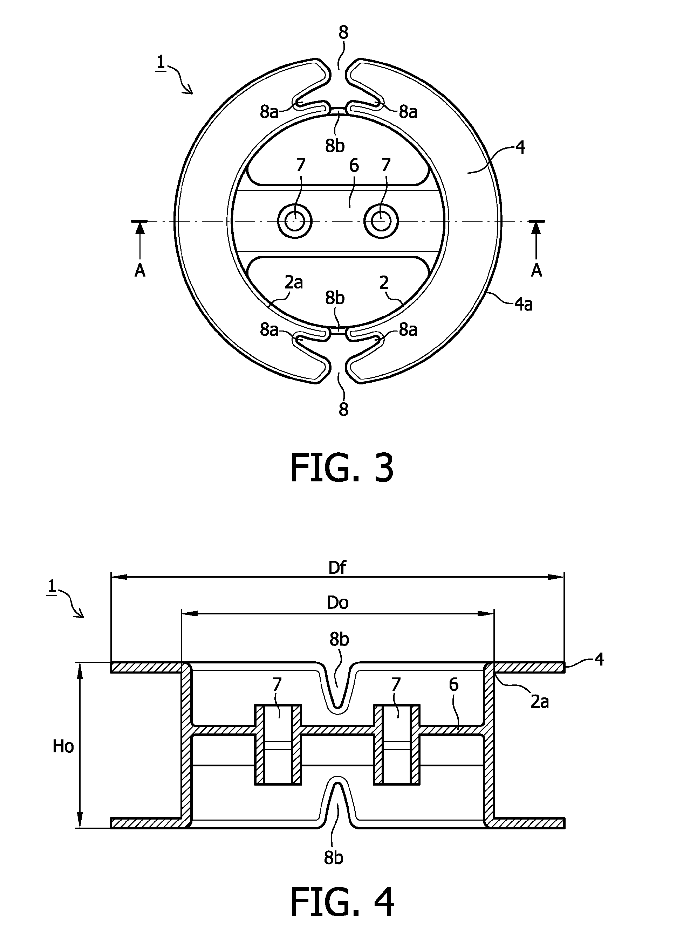

Figure 1 shows a cylindrically formed carrier 1 of a device for storing an electricity cable according to the invention. Carrier 1 is formed by a first cylindrically formed peripheral wall 2 which encloses a first space 3. Flanges 4 are connected to side edges 2a of the first peripheral wall 2. Flanges 4 and the side of the first peripheral wall 2 remote from first space 3 form a receiving space 5 for the cable. Extending inside first space 3 is a bridge 6 which is connected at opposite locations 6a to first peripheral wall 2. Bridge 6 comprises two passage openings 7 extending in the longitudinal direction of the cylindrically formed carrier 1 for the purpose of receiving plug pins of the plug connected to the cable. Bridge 6 also imparts a considerable stiffness to carrier 1, since first peripheral wall 2 can be compressed to limited extent in the longitudinal direction of the bridge, whereby a user can wind a cable more tightly round the carrier. Flanges 4 are each provided with a slot 8 extending from an outer edge 4a of flanges 4 into first peripheral wall 2. Slots 8 each comprise two tapering portions 8a in flange 4, wherein tapering portions 8a of each slot 8 extend in opposite peripheral directions as according to arrow PI. Slot 8 also comprises a tapering portion 8b in first peripheral wall 2. The width of slot 8 is chosen such that usual two and three-core cables can be placed in the slots, and is typically 3 mm. Slot 8 has a greater width on outer edge 4a of flanges 4, which facilitates placing of a cable in slot 8. The cable can be connected clampingly to flanges 8 by urging the cable into tapering portion 8a or 8b of slots 8. The advantage of the tapering portions 8b of slot 8 extending in first peripheral wall 2 is that an end part of the cable to be stored can be placed in first space 3, whereby the stored cable takes up less space. The carrier is manufactured from polystyrene and has a typical wall thickness of first peripheral wall 2 and of flanges 8 of about 1.5 mm. In this embodiment the diameter Do of first peripheral wall 2 is about 47 mm, the diameter Df of flanges 4 at their outer edge is 68 mm and the height of receiving space 5 is about 22 mm (see also figure 4). Receiving space 5 has a volume which is preferably greater than 20 cm³ and preferably more than 40 cm³. Cables with a diameter of 3 mm and a length of 2 m, having a volume of about 15 cm³, can hereby be stored in simple manner. Although an over-dimensioned receiving space 5 has the drawback that the device according to the invention for storing an electricity cable connected to a plug is larger than is perhaps necessary to enable storage of the cable, it has the advantage that a user can place the cable less precisely in receiving space 5 and still be able to fit the whole cable into receiving space 5. This enhances the convenience of use of the device according to the invention for storing an electricity cable connected to a plug.

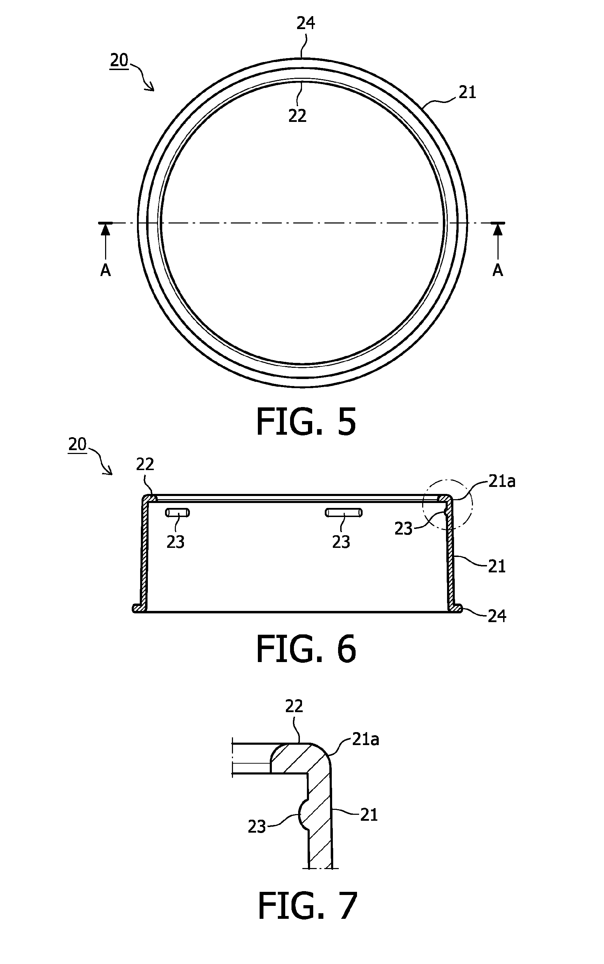

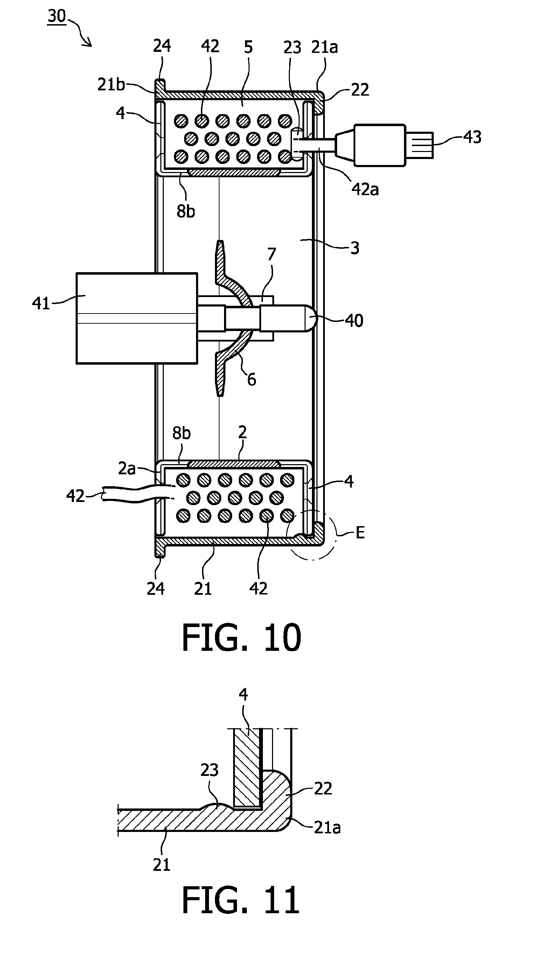

Figure 2 shows a cover element 20 manufactured substantially from acrylonitrile butadiene styrene for covering receiving space 5 of carrier 1 of figure 1. Cover element 20 is formed by a second peripheral wall 21 which has a diameter adapted to the outer edge 4a of flanges 4. On a first outer edge 21a of second peripheral wall 21 the second peripheral wall 21 comprises an inward directed flange 22 (see also figures 6,7,10,11). At a distance from first outer edge 21a five protrusions 23 are arranged distributed over the periphery of the second peripheral wall 21 and directed inward of the second peripheral wall (see also figures 6,7,10,11). On a second outer edge 21b of second peripheral wall 21 the second peripheral wall 21 comprises an outward directed flange 24 (see also figures 6,7,10,11). The inward directed flange 22 and protrusion 23 of second peripheral wall 21 have the purpose of limiting the movement in the longitudinal direction of carrier 1, in a situation where cover element 20 is placed round carrier 1, in that a flange 4 extends between flange 22 of cover element 20 and protrusions 23 (see also figures 10 and 11). The outward directed flange 24 of second peripheral wall 21 has the purpose of providing a gripping edge for the user to enable simple removal of the cover element from carrier 1.

Figure 3 shows a top view of carrier 1 of figure 1. Bridge 6 with passage openings 7 can be clearly seen here. The increased width of slot 8 on outer edge 4a and tapering portions 8a,8b of slot 8 are also clearly visible.

Referring to figure 4, a cross-section of carrier 1 of figure 3 is shown along line A-A. Particularly the tapering portions 8b of slot 8 present in the first peripheral wall are clearly visible here.

Figure 5 shows a top view of cover element 20 of figure 2. Shown successively in radial direction are the inward directed flange 22 of second peripheral wall 21, the second peripheral wall 21 and the outward directed flange 24.

Referring to figure 6, a cross-section of the cover element of figure 5 is shown along line A-A. Clearly visible in this figure are the distribution of protrusions 23 along the periphery of peripheral wall 21, the inward directed flange 22 of second peripheral wall 21 and the outward directed flange 24.

Figure 7 shows a detail of the cross-section of cover element 2 of figure 6.

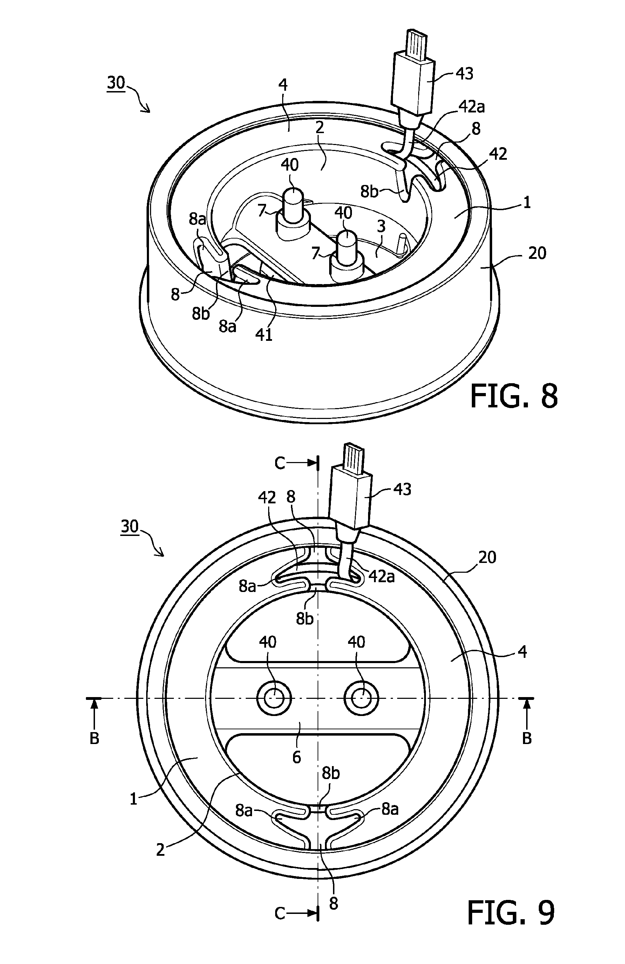

Figure 8 is a perspective view of a device 30 according to the invention for storing an electricity cable connected to a plug. Device 30 comprises carrier 1 of figure 1, wherein cover element 20 of figure 5 is placed round carrier 1. Plug pins 40 of a plug 41 are placed in passage openings 7. Situated in receiving space 5 is a cable 42 connected to plug 41, which cable 42 is wound round first peripheral wall 2. A free end part 42a of cable 42 is connected clampingly to cover element 20 in that the free end part 42a of cable 42 is urged by the user into a tapering portion 8a of slot 8. A plug 43, the dimensions of which are apparatus-specific, is connected to free end part 42a of cable 42. Plug 43 can thus be dimensioned for use in combination with a mobile telephone. Free end part 42a of cable 42 is placed here in a tapering portion 8a of slot 8. It is however also possible to place the cable in the tapering portion 8b of slot 8 present in first peripheral wall 2. The advantage here is that free end part 42a of the cable and plug 43 are situated in first space 3, whereby the stored cable takes up less space.

Figure 9 is a top view of device 30 of figure 8.

Referring to figure 10, a cross-section of device 30 of figure 9 is shown along line C-C. Shown clearly here is that plug 41 is received in the first space 3 enclosed by first peripheral wall 2. Cable 42 extends from plug 41 into receiving space 5 through a slot 8 present on a first flange 4. In receiving space 5 the cable 42 is stored and wound several times round first peripheral wall 2 of carrier 1. Through a slot 8 present on a second flange 4 the cable 42 extends from receiving space 5 to a position outside receiving space 5, and is there positioned by clamping connection to flange 4 in a tapering portion 8a of a slot 8. Because plug pins 40 of plug 41 are engaged and bridge 6 forms a blocking for the plug, plug 41 extends largely outside carrier 1, and cable 42 can hereby be placed in simple manner in receiving space 5 without cable 42 having to be deformed to a relatively great extent, and whereby the risk of cable break is therefore relatively small.

Figure 11 shows a detail of the cross-section of the device of figure 10 in the area E indicated in the figure. Clearly visible here is how flange 4 is held between protrusions 23 and the inward directed flange 22 of second peripheral wall 21.

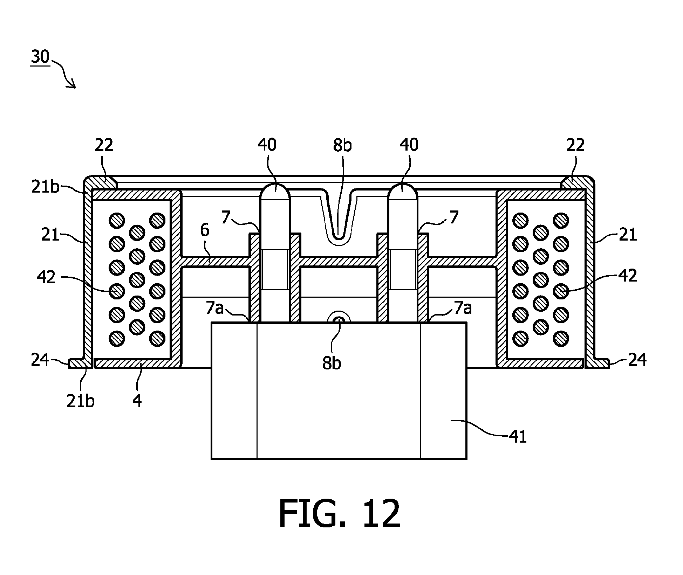

Figure 12 shows a cross-section of device 30 of figure 9 along line B-B. Clearly shown here is that plug 41 rests on edges 7a of the wall parts enclosing openings 7.

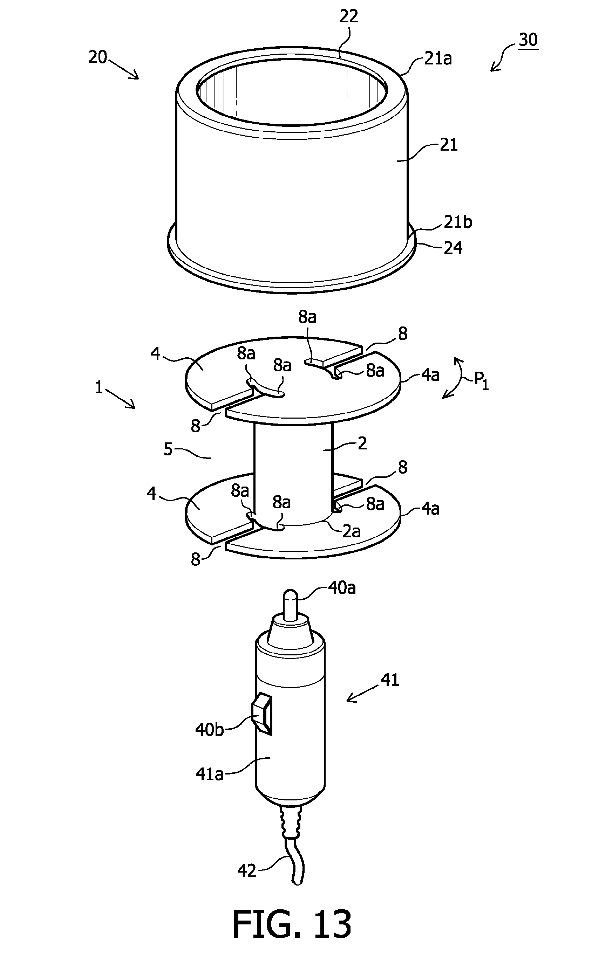

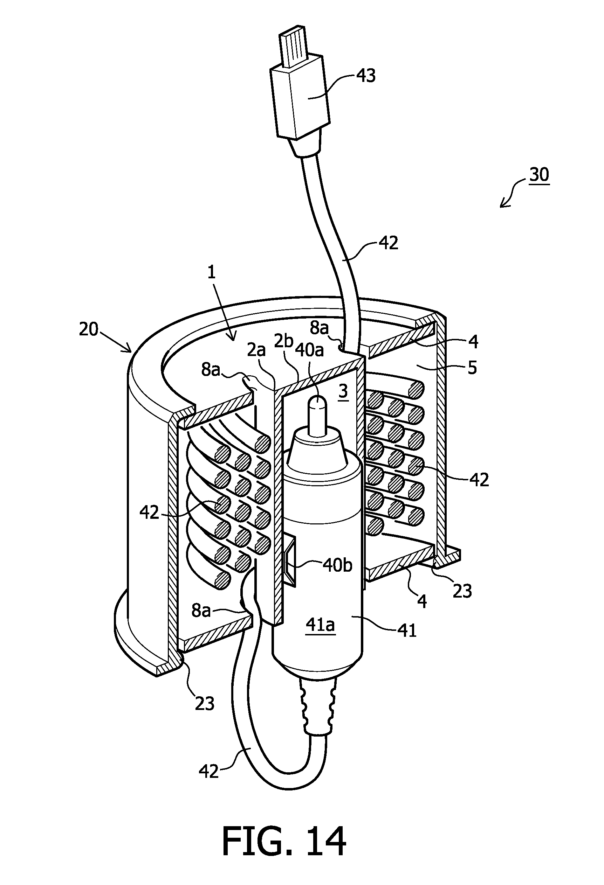

Figure 13 shows a device 30 according to the invention for storing an electricity cable connected to an accessory plug. Device 30 comprises a carrier 1 formed by a first cylindrically formed peripheral wall 2 which encloses a first cylindrically formed space 3 (see figure 14). On side edges 2a of first peripheral wall 2 flanges 4 are connected to first peripheral wall 2. Flanges 4 and the side of first peripheral wall 2 remote from first space 3 form a receiving space 5 for a cable. Flanges 4 are each provided with a slot 8 which extends from an outer edge 4a of flanges 4. Slots 8 each comprise two tapering portions 8a in flange 4, wherein tapering portions 8a of each slot 8 extend in opposite peripheral directions as according to arrow P1. The width of slot 8 is chosen such that usual two and three-core cables can be placed in the slots, and is typically 3 mm. Slot 8 has a greater width on outer edge 4a of flanges 4, which facilitates placing of a cable in slot 8. By urging the cable into tapering portion 8a of slots 8 the cable can be clampingly connected to flanges 8. Carrier 1 is manufactured from polystyrene and has a typical wall thickness of first peripheral wall 2 and of flanges 8 of about 1.5 mm. Receiving space 5 has a volume which is preferably greater than 20 cm³ and preferably more than 40 cm³. Cables with a diameter of 3 mm and a length of 2 m, having a volume of about 15 cm³, can hereby be stored in simple manner. Although an over-dimensioned receiving space 5 has the drawback that the device according to the invention for storing an electricity cable connected to a plug is larger than is perhaps necessary to enable storage of the cable, it has the advantage that a user can place the cable less precisely in receiving space 5 and still be able to fit the whole cable into receiving space 5. This enhances the convenience of use of the device according to the invention for storing an electricity cable connected to a plug. Device 30 also comprises a cover element 20 manufactured substantially from acrylonitrile butadiene styrene for covering receiving space 5 of carrier 1. Cover element 20 is formed by a second peripheral wall 21, which has a diameter adapted to outer edge 4a of flanges 4. On a first outer edge 21a of second peripheral wall 21 the second peripheral wall 21 comprises an inward directed flange 22. On a second outer edge 21b of second peripheral wall 21 the second peripheral wall 21 comprises an outward directed flange 24 and a plurality of protrusions 23 arranged distributed over the periphery of the second peripheral wall 21 and directed inward of the second peripheral wall (see also figure 14). It is also possible to envisage protrusions 23 being embodied as a flange 23 extending along the periphery of the second peripheral wall. The inward directed flange 22 of second peripheral wall 21 and the plurality of protrusions or flange 23 have the purpose of limiting the movement of carrier 1 in the longitudinal direction, in a situation where cover element 20 is placed round carrier 1, in that a first flange 4 lies against flange 22 of cover element 20 and a second flange 4 lies against protrusion 23 (see also figure 14). The outward directed flange 24 of second peripheral wall 21 has the object of providing a gripping edge for the user to enable simple removal of the cover element 20 from carrier 1.

Figure 14 is a perspective view, shown partially in cross-section, of device 30 of figure 13 for storing an electricity cable 42 connected to an accessory plug 41, wherein device 30 is partially cut-away. The first cylindrically formed receiving space 3 of carrier 1 has dimensions which correspond with the usual dimensioning of an accessory plug 41, also referred to as cigarette lighters, for use in a vehicle such as a car, truck or boat. Such an accessory plug 41 usually comprises an elongate cylindrically formed housing 41a provided with one first plug pin 40a extending outside housing 41a in the axial direction of the plug and one or more second plug pins 40b located at a distance from first plug pin 40a on the outside of a peripheral wall of housing 41a of accessory pin 41. Second plug pins 40b are embodied as resilient elements. A first end of the cylindrical receiving space 3 is closed by a wall 2b and a second, opposite end of the first cylindrical receiving space 3 is open in order to provide plug 41 with access into the first cylindrical receiving space 3 (see figure 14). The diameter of first receiving space 3 is dimensioned such that cylindrically formed housing 41a can be received in first receiving space 3, wherein the second plug pins 40b embodied as resilient elements press against the inner side of first peripheral wall 2 when plug 41 is received in first receiving space 3. Because the second plug pins 40b embodied as resilient elements press against the inner side of first peripheral wall 2, plug 41 is engaged by carrier 1. The inner side of first peripheral wall 2 can be provided here with a recess or hole for receiving the second plug pins 40b embodied as resilient elements, whereby this plug 41 is engaged more effectively. For use of accessory plug 41 the vehicle is provided with an opening suitable for the accessory plug which is adapted for electrically conductive connection of the accessory plug to a source of electrical energy. It is possible here to envisage carrier 1 also being open at the first end of cylindrical receiving space 3, whereby plug 41 can be placed further into carrier 1 such that first and second plug pins 40a,40b can be placed in the opening of the vehicle suitable for the accessory plug, wherein plug 41 can be connected in electrically conductive manner to a source of electrical energy.

It will be apparent that the invention is not limited to the exemplary embodiments shown and described here, but that within the scope of the appended claims numerous variants are possible which will be self-evident to the skilled person in this field. The bridge, which extends between opposite locations on the inner side of first peripheral wall 2, can thus take a different form. In the embodiment shown here the bridge forms a blocking for the plug. The bridge can however also be formed such that the plug can be placed further in the longitudinal direction of the carrier so that the plug pins extend beyond the first space. The cable can hereby be used because the plug pins can be placed in a plug socket while the cable, or at least a large part thereof, is stored in the receiving space of the device for storing an electricity cable connected to a plug.

## Claims

1. Device for storing an electricity cable, comprising a holder for the cable, wherein the holder fits within a space with a width, length and height each lying between 4 and 15 centimetres, preferably between 5 and 12 centimetres and most preferably between 6 and 10 centimetres,
wherein the holder comprises a carrier (1) for holding at least a part of the cable round the carrier, wherein the carrier is provided with at least one protrusion for preventing a relative displacement of the carrier and a part of the cable held round the carrier (1), wherein the carrier (1) is formed by a first peripheral wall (2) which encloses a space and wherein the holder is adapted to at least partially engage at least one plug, which is connected directly or indirectly to the electricity cable, in the space enclosed by the first peripheral wall (2) and wherein
the holder comprises two or three flanges (4) connected to the carrier (1) and extending at a mutual distance and substantially parallel to each other for holding at least a part of the cable round the carrier (1) and between the flanges (4); **characterized in that** the device comprises a removable cover element (20) for covering the holder formed by a second peripheral wall (2) which can be placed round at least one flange (4).

2. Device as claimed in claim 1, **characterized in that** the holder is adapted to engage only the plug pins (40) of the at least one plug (41).

3. Device as claimed in claim 1 or 2, **characterized in that** the holder is adapted to engage substantially the plug housing.

4. Device as claimed in any of the foregoing claims, **characterized in that** the space enclosed by the first peripheral wall is at least partially bounded by two opposite side walls, which side walls are provided with engaging means, such as grooves, for engaging the plug housing.

5. Device as claimed in any of the foregoing claims, **characterized in that** the holder is adapted to engage the at least one plug in electrically insulating manner.

6. Device as claimed in any of the foregoing claims, **characterized in that** the holder, in a situation where it engages the at least one plug, is adapted to leave clear a part of the plug housing for electrically conductive connection of the at least one plug to a plug socket.

7. Device as claimed in claim 6, **characterized in that** the holder comprises a bridge (6) which extends on the inner wall and close to a first edge of the cylindrical carrier (1), and which is provided with holes for leaving clear, in a situation engaging on the at least one plug, at least a part of the plug pins on the side of the bridge (6) remote from the cylindrical carrier (1) for the purpose of electrically conductive connection of the at least one plug to a plug socket.

8. Device as claimed in any of the foregoing claims, **characterized in that** the second peripheral wall comprises at least one inward directed protrusion of the peripheral wall for the purpose of forming, in co-action with a flange connected to the carrier, a blocking for the second peripheral wall.

9. Device as claimed in any of the foregoing claims, **characterized in that** the holder comprises a passage for throughfeed of the cable into the holder.

10. Device as claimed in any of the foregoing claims, **characterized in that** the device comprises a clamp for clampingly engaging the cable.

11. Device as claimed in any of the foregoing claims, **characterized in that** the holder comprises at least one slot (8) which is situated in at least one flange and/or the carrier and is accessible from an outer edge of the at least one flange and which comprises at least one tapering portion (8a).

12. Device as claimed in claim 11, **characterized in that** the at least one slot (8) extends and tapers in a peripheral direction.

13. Device as claimed in claim 12, **characterized in that** the at least one slot (8) extends and tapers in both peripheral directions.

14. Device as claimed in any of the foregoing claims, **characterized in that** the holder comprises at least two tapering slots (8) situated at a mutual distance present in at least one flange.

15. Method for storing an electricity cable connected to a plug, making use of the device as claimed in any of the claims 1-14, comprising of:
- placing the cable in a holder; and
- connecting the plug to the holder by the holder engaging at least a part of the plug.

## Patentansprüche

1. Vorrichtung zur Aufbewahrung eines Stromkabels, umfassend einen Halter für das Kabel, wobei der Halter in einen Raum mit einer Breite, Länge und Höhe passt, die sich jeweils zwischen 4 und 15 Zentimetern, vorzugsweise zwischen 5 und 12 Zentimetern und besonders bevorzugt zwischen 6 und 10 Zentimetern bewegen,
wobei der Halter einen Träger (1) zum Halten mindestens eines Teils des Kabels um den Träger umfasst, wobei der Träger mit mindestens einem Vorsprung versehen ist, um eine relative Verschiebung des Trägers und eines Teils des um den Träger (1) gehaltenen Kabels zu verhindern, wobei der Träger (1) durch eine erste Umfangswand (2) gebildet ist, die einen Raum umschließt, und wobei der Halter geeignet ist, mindestens einen Stecker, der direkt oder indirekt mit dem Stromkabel verbunden ist, mindestens teilweise in dem durch die erste Umfangswand (2) umschlossenen Raum in Eingriff zu nehmen, und wobei der Halter zwei oder drei Flansche (4) umfasst, die mit dem Träger (1) verbunden sind und sich in einem gegenseitigen Abstand und im Wesentlichen parallel zueinander erstrecken, um mindestens einen Teil des Kabels um den Träger (1) herum und zwischen den Flanschen (4) zu halten, **dadurch gekennzeichnet, dass** die Vorrichtung ein durch eine zweite Umfangswand (2), die um mindestens einen Flansch (4) herum platziert werden kann, gebildetes entfernbares Abdeckungselement (20) zum Abdecken des Halters umfasst.

2. Vorrichtung nach Anspruch 1, **dadurch gekennzeichnet, dass** der Halter geeignet ist, nur die Steckerstifte (40) des mindestens einen Steckers (41) in Eingriff zu nehmen.

3. Vorrichtung nach Anspruch 1 oder 2, **dadurch gekennzeichnet, dass** der Halter geeignet ist, im Wesentlichen das Steckergehäuse in Eingriff zu nehmen.

4. Vorrichtung nach einem der vorhergehenden Ansprüche, **dadurch gekennzeichnet, dass** der durch die erste Umfangswand umschlossene Raum mindestens teilweise durch zwei gegenüberliegende Seitenwände begrenzt ist, die mit Eingriffsmitteln wie Nuten zur Ineingriffnahme des Steckergehäuses versehen sind.

5. Vorrichtung nach einem der vorhergehenden Ansprüche, **dadurch gekennzeichnet, dass** der Halter geeignet ist, den mindestens einen Stecker elektrisch isolierend in Eingriff zu nehmen.

6. Vorrichtung nach einem der vorhergehenden Ansprüche, **dadurch gekennzeichnet, dass** der Halter, wenn er den mindestens einen Stecker in Eingriff nimmt, geeignet ist, einen Teil des Steckergehäuses für eine elektrisch leitende Verbindung des mindestens einen Steckers mit einer Steckdose frei zu lassen.

7. Vorrichtung nach Anspruch 6, **dadurch gekennzeichnet, dass** der Halter eine Brücke (6) umfasst, die sich an der inneren Wand und nahe einem ersten Rand des zylindrischen Trägers (1) erstreckt und mit Löchern versehen ist, um bei Ineingriffnahme des mindestens einen Steckers mindestens einen Teil der Steckerstifte auf der vom zylindrischen Träger (1) entfernt liegenden Seite der Brücke (6) für eine elektrisch leitende Verbindung des mindestens einen Steckers mit einer Steckdose frei zu lassen.

8. Vorrichtung nach einem der vorhergehenden Ansprüche, **dadurch gekennzeichnet, dass** die zweite Umfangswand mindestens einen nach innen gerichteten Vorsprung der Umfangswand umfasst, um in Zusammenwirkung mit einem mit dem Träger verbundenen Flansch eine Blockierung für die zweite Umfangswand zu bilden.

9. Vorrichtung nach einem der vorhergehenden Ansprüche, **dadurch gekennzeichnet, dass** der Halter einen Durchgang zum Hindurchführen des Kabels in den Halter umfasst.

10. Vorrichtung nach einem der vorhergehenden Ansprüche, **dadurch gekennzeichnet, dass** die Vorrichtung eine Klemme zur Klemmineingriffnahme des Kabels umfasst.

11. Vorrichtung nach einem der vorhergehenden Ansprüche, **dadurch gekennzeichnet, dass** der Halter mindestens einen Schlitz (8) umfasst, der in mindestens einem Flansch und/oder dem Träger angeordnet und von einem äußeren Rand des mindestens einen Flanschs zugänglich ist und mindestens einen sich verjüngenden Abschnitt (8a) umfasst.

12. Vorrichtung nach Anspruch 11, **dadurch gekennzeichnet, dass** sich der mindestens eine Schlitz (8) in einer Umfangsrichtung erstreckt und verjüngt.

13. Vorrichtung nach Anspruch 12, **dadurch gekennzeichnet, dass** sich der mindestens eine Schlitz (8) in beiden Umfangsrichtungen erstreckt und verjüngt.

14. Vorrichtung nach einem der vorhergehenden Ansprüche, **dadurch gekennzeichnet, dass** der Halter mindestens zwei sich verjüngende Schlitze (8) umfasst, die in einem gegenseitigen Abstand in mindestens einem Flansch angeordnet sind.

15. Verfahren zur Aufbewahrung eines mit einem Stecker verbundenen Stromkabels unter Verwendung der Vorrichtung nach einem der Ansprüche 1 - 14, umfassend:
- Platzieren des Kabels in einen Halter und
- Verbinden des Steckers mit dem Halter, indem der Halter mindestens einen Teil des Steckers in Eingriff nimmt.

## Revendications

1. Dispositif de stockage d'un câble électrique, comportant un réceptacle pour le câble,
le réceptacle s'ajustant à l'intérieur d'un espace présentant une largeur, une longueur et une hauteur se situant chacune entre 4 et 15 centimètres, de préférence entre 5 et 12 centimètres et idéalement entre 6 et 10 centimètres,
le réceptacle comportant un support (1) servant à maintenir au moins une partie du câble autour du support, le support étant muni d'au moins une protubérance servant à empêcher un déplacement relatif du support et d'une partie du câble maintenu autour du support (1),
le support (1) étant formé par une première paroi périphérique (2) qui enveloppe un espace et le réceptacle étant prévu pour interagir au moins partiellement avec au moins une fiche, qui est reliée directement ou indirectement au câble électrique, dans l'espace enveloppé par la première paroi périphérique (2) et le réceptacle comportant deux ou trois flasques (4) reliés au support (1) et s'étendant à une distance mutuelle et sensiblement parallèlement l'un à l'autre pour maintenir au moins une partie du câble autour du support (1) et entre les flasques (4) ; **caractérisé en ce que** le dispositif comporte un élément (20) de couvercle amovible servant à recouvrir le réceptacle, formé par une deuxième paroi périphérique (2) qui peut être placée autour d'au moins un flasque (4).

2. Dispositif selon la revendication 1, **caractérisé en ce que** le réceptacle est prévu pour n'interagir qu'avec les broches (40) de fiche de la ou des fiches (41).

3. Dispositif selon la revendication 1 ou 2, **caractérisé en ce que** le réceptacle est prévu pour interagir avec sensiblement le boîtier de la fiche.

4. Dispositif selon l'une quelconque des revendications précédentes, **caractérisé en ce que** l'espace enveloppé par la première paroi périphérique est au moins partiellement délimité par deux parois latérales opposées, lesdites parois latérales étant munies de moyens d'interaction, comme des rainures, servant à interagir avec le boîtier de la fiche.

5. Dispositif selon l'une quelconque des revendications précédentes, **caractérisé en ce que** le réceptacle est prévu pour interagir avec la ou les fiches de manière électriquement isolante.

6. Dispositif selon l'une quelconque des revendications précédentes, **caractérisé en ce que** le réceptacle, dans une situation où il interagit avec la ou les fiches, est prévu pour laisser dégagée une partie du boîtier de la fiche en vue d'une connexion électriquement conductrice de la ou des fiches à une prise pour fiche.

7. Dispositif selon la revendication 6, **caractérisé en ce que** le réceptacle comporte un pont (6) qui s'étend sur la paroi intérieure et près d'un premier bord du support cylindrique (1), et qui est muni de trous pour laisser dégagée, dans une situation d'interaction sur la ou les fiches, au moins une partie des broches de fiche du côté du pont (6) éloigné du support cylindrique (1) à des fins de connexion électriquement conductrice de la ou des fiches à une prise pour fiche.

8. Dispositif selon l'une quelconque des revendications précédentes, **caractérisé en ce que** la deuxième paroi périphérique comporte au moins une protubérance dirigée vers l'intérieur de la paroi périphérique dans le but de former, en coopération avec un flasque relié au support, un arrêt pour la deuxième paroi périphérique.

9. Dispositif selon l'une quelconque des revendications précédentes, **caractérisé en ce que** le réceptacle comporte un passage pour la traversée du câble jusque dans le réceptacle.

10. Dispositif selon l'une quelconque des revendications précédentes, **caractérisé en ce que** le dispositif comporte une pince servant à interagir par serrage avec le câble.

11. Dispositif selon l'une quelconque des revendications précédentes, **caractérisé en ce que** le réceptacle comporte au moins une fente (8) qui est située dans au moins un flasque et / ou le support et est accessible à partir d'un bord extérieur du ou des flasques et qui comporte au moins une partie rétrécie (8a).

12. Dispositif selon la revendication 11, **caractérisé en ce que** la ou les fentes (8) s'étendent et se rétrécissent dans une direction périphérique.

13. Dispositif selon la revendication 12, **caractérisé en ce que** la ou les fentes (8) s'étendent et se rétrécissent dans les deux directions périphériques.

14. Dispositif selon l'une quelconque des revendications précédentes, **caractérisé en ce que** le réceptacle comporte au moins deux fentes rétrécies (8) situées à une distance mutuelle, présentes dans au moins un flasque.

15. Procédé de stockage d'un câble électrique relié à un fiche, faisant usage du dispositif selon l'une quelconque des revendications 1 à 14, comportant les étapes consistant à :
- placer le câble dans un réceptacle ; et
- relier la fiche au réceptacle par interaction du réceptacle avec au moins une partie de la fiche.
